# EUROPEAN PATENT SPECIFICATION

(11) **EP 2 819 454 B1**
(45) Date of publication and mention of the grant of the patent: **04.12.2019**
(21) Application number: 13173410.5
(22) Date of filing: 24.06.2013
(51) Int. Cl.: H04W 24/10, H04W 24/08, H04W 88/06

(54) **Enhancing the transmission of environment-related information between a user equipment and a mobile communication network**
Verbesserung der Übertragung von umgebungsbedingten Informationen zwischen einem Benutzergerät und einem mobilen Kommunikationsnetzwerk
Amélioration de la transmission d'informations écologiques entre un équipement utilisateur et un réseau de communication mobile

(43) Date of publication of application: 31.12.2014
(73) Proprietor: Deutsche Telekom AG, 53113 Bonn (DE)
(72) Inventor: Zingler, Olaf, 53227 Bonn (DE); Lehser, Frank, 53175 Bonn (DE)
(74) Representative: Schwöbel, Thilo K.

(56) References cited:
- EP-A2- 2 360 962
- US-A1- 2008 076 450
- US-A1- 2013 115 970
- ERICSSON ET AL: "3GPP TSG-RAN WG2 #82; R2-131886; WLAN/3GPP Radio Interworking - More on IDLE and CONNECTED", 3GPP DRAFT; R2-131886 WLAN-3GPP RADIO INTERWORKING - MORE ON IDLE AND CONNECTED MODE SOLUTION, 3RD GENERATION PARTNERSHIP PROJECT (3GPP), MOBILE COMPETENCE CENTRE ; 650, ROUTE DES LUCIOLES ; F-06921 S , vol. RAN WG2, no. Fukuoka, Japan; 20130520 - 20130524 10 May 2013 (2013-05-10), pages 1-10, XP050699917, Retrieved from the Internet: URL:http://www.3gpp.org/ftp/tsg_ran/WG2_RL 2/TSGR2_82/Docs/ [retrieved on 2013-05-10]
- BROADCOM CORPORATION: "3GPP TSG-RAN WG2 #82; R2-132020; Limitations on WLAN measurements for WLAN/3GPP Radio Interworking", 3GPP DRAFT; R2-132020-WLAN-3GPP-INTERWORKING-WLAN-MEAS UREMENT AND SIGNAL STRENGTH, 3RD GENERATION PARTNERSHIP PROJECT (3GPP), MOBILE COMPETENCE CENTRE ; 650, ROUTE DES LUCIOLES ; F-06921 SOPHIA-ANTIPO , vol. RAN WG2, no. Fukuoka, Japan; 20130514 - 20130520 11 May 2013 (2013-05-11), pages 1-5, XP050700122, Retrieved from the Internet: URL:http://www.3gpp.org/ftp/tsg_ran/WG2_RL 2/TSGR2_82/Docs/ [retrieved on 2013-05-11]
- ORANGE ET AL: "MDT Measurement Model R2-100239", 3GPP TSG RAN WG2 MEETING #68BIS VALENCIA, SPAIN,, vol. R2-100239, no. #68BIS, 18 January 2010 (2010-01-18), pages 1-3, XP002629990,
- BROADCOM CORPORATION: "Air-Interface Enhancement Proposals for WLAN/3GPP Radio Interworking", 3GPP DRAFT; R2-131384-WLAN-3GPP-AIR-INTERAFCE ENHANCEMENT PROPOSALS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FR , vol. RAN WG2, no. Chicago; 20130415 - 20130419 5 April 2013 (2013-04-05), XP050699348, Retrieved from the Internet: URL:http://www.3gpp.org/ftp/tsg_ran/WG2_RL 2/TSGR2_81bis/Docs/ [retrieved on 2013-04-05]

## Description

### BACKGROUND

The present invention relates to a method for the transmission of environment-related information between a user equipment and a mobile communication network, the transmission of environment-related information by the user equipment being especially provided for the purpose of minimization of drive tests (MDT) within the mobile communication network.

The present invention further relates to a user equipment for enhancing the transmission of environment-related information between the user equipment and a mobile communication network, also especially for the MDT purpose.

Drive testing is used by operators of conventional cellular networks in order to regularly assess the quality of the mobile communication network. Drive testing is comparably expensive hence there have been efforts to reduce or minimize such drive tests. Minimization of drive tests (MDT) enables the mobile communication network to collect radio measurements from user equipments together with location information if available when the measurements are taken. Thus, minimization of drive tests is a feature that enables operators of mobile communication networks to utilize the user equipments of subscribers to collect radio measurements and associated location information, in order to assess network performance while reducing the OPEX associated with traditional drive tests.

MDT can typically be realized by recording signalling, such as radio resource control (RRC) messages between the user equipment and radio access network nodes, messages between radio access network nodes, and messages between radio access network and core network nodes.

MDT is especially useful if it is possible to locate the user equipment that performs the measurement or measurements for MDT purposes. Moreover, the more the estimation of the location or position of the user equipment is precise, the more the measurement or measurements for MDT purposes is useful to improve the performance of the mobile communication network.

In order to obtain a location or position estimation of the user equipment performing the MDT measurement, it has been proposed to derive the location or position of the user equipment based on information such as signal strength values, timing advance values and/or by using triangulation methods or techniques using prediction data based on theoretical physical models or measured reference data based on, e.g., signal strengths of neighbour cells of the mobile communication network. It is underlined that known solutions only rely on information that are available within the context of interfaces described by the 3GPP (Third Generation Partnership Project) standardisation and especially with respect to the radio interface(s) used for the transfer of user data.

However, especially in areas of a particular interest from a mobile network operator like indoor scenarios or e.g. in urban areas with single serving cell situations with e.g. the same timing advance value and/or field strength level of his own radio network, such approaches often provide comparably poor location and/or position estimations of the user equipment performing the MDT measurements.

### SUMMARY

An object of the present invention is to provide a robust and comparably simple, effective and especially cost effective solution for enhancing the transmission of environment-related information between a user equipment and a mobile communication network. A further object of the present invention is to provide a user equipment, a mobile communication network, programs comprising computer readable program code and computer program products, such that position or location can be derived with respect to user equipments that perform MDT measurements.

The object of the present invention is achieved by a method for enhancing the transmission of environment-related information between a user equipment and a mobile communication network according to the subject-matter of claim 1.

It is thereby advantageously possible according to the present invention that a location information and/or a position information regarding the user equipment (that performs the MDT measurement or measurements) can be more precisely estimated by a network node or a function of the mobile communication network, using the environment-related information transmitted by the user equipment.

Especially, it is advantageously possible to comparably precisely locate the user equipment that performs the MDT measurement by means of using reference information obtained (by the mobile communication network) prior to the MDT measurement in question. The reference information combines radio environment data at a certain number of locations or positions with location or position information (for these specific locations or positions). In case such reference information is available with a sufficient density (i.e. the average length of difference vectors between neighbouring positions or locations of geographical points contained in the reference information is sufficiently small and for this number of positions or locations both the radio environment data and the (absolute) positions or locations are known or can be determined), it is typically possible to relatively precisely estimate the actual position or location of the user equipment performing the MDT measurement and providing environment-related information - even in case that the user equipment does not provide an absolute geographical information regarding its position or location at the time of the measurement.

According to the present invention, all characteristic data reflecting the specific location of the user equipment are consolidated in a data base. These data serve as reference data or information. In case that - for other MDT measurements - only fragments of such data with inherent location information are given or are available, a mapping or estimation method can be performed to the exact location of the user equipment at such measurements by means of a comparison/correlation of the data of incomplete data sets with data of complete data sets (i.e. the reference information) in the data base or interpolations between them.

An example thereof is given in the following:

### Reference data:

Location A1: GPS information, LTE Signal Strength 1 (LTE-SS1), LTE-SS2, LTE-SS3, LTE-SS4, LTE-SS5, LTE-SS6, LTE-SS7, LTE-SS8, LTE-SS9, LTA-TA,WLAN-SSID1, WLAN-SSID2, WLAN-SSID3, WLAN-SSID4, ... others
Location A2: GPS information, LTE Signal Strength 1 (LTE-SS1), LTE-SS2, LTE-SS3, LTE-SS4, LTE-SS5, LTE-SS6, LTE-SS7, LTE-SS8, LTE-SS9, LTA-TA,WLAN-SSID1, WLAN-SSID2, WLAN-SSID3, WLAN-SSID4, ... others

If now measurement data are given as e.g. "Measurement 1: LTE-SS1, WLAN-SSID1, WLAN-SSID2, WLAN-SSID3", this can be compared with the complete data or reference data of A1, A2, Ax, ....

If the data fragment fits to the identified location, it is very likely (and hence can be estimated) that the user equipment at the time of the measurement of the fragmented data was located at the fitted or estimated position or location. The more characteristics that are available for this purpose, the higher is the probability to estimate the location of the user equipment.

According to the present invention, the user equipment comprises a first radio interface for communication purposes with the (serving) base station entity of the mobile communication network, i.e. the base station entity on which the user equipment is currently camping. The radio connection between the user equipment and the base station entity using the first radio interface is at least able to be established. This means that the user equipment is
-- either in connected mode, hence the radio connection using the first radio interface is established (in both downlink direction and uplink direction),
-- or in idle mode, hence the radio connection using the first radio interface is not established (at least not completely established, i.e. both in downlink direction and in uplink direction) but it is able to be established, either following a triggering event of the user equipment (mobile originated event) or of the mobile communication network / base station entity (mobile terminated / paging event). In any case, the user equipment is listening to a broadcast control channel and/or dedicated control channel of the base station entity.

Additionally, the user equipment comprises a second radio interface, the second radio interface being a WLAN-type (wireless local area network) capable radio interface (i.e. the second radio interface is at least able to detect WLAN hotspots, typically WLAN-router connected to the internet via a fixed line digital subscriber line or via a (at least partly) wireless connection to the internet), or the second radio interface being a different radio interface compared to the first radio interface, especially in the sense that the second radio interface is not a 3GPP-type radio interface (i.e. the second radio interface not being a radio interface as standardized by the 3GPP standardization documents, especially a GSM, UMTS, GERAN or LTE radio interface), but a different radio interface, e.g. of the Bluetooth-type or a CDMA-type. This is important because, conventionally, the radio interfaces according to the 3GPP standardization typically do not refer to or include information or data being related to radio interfaces defined by other standards or radio interfaces, especially the IEEE standards.

According to the inventive method, a measurement configuration information is transmitted from the mobile communication network to the user equipment in a first step. The measurement configuration information is especially based on a feature set indicator, the feature set indicator being signalled (prior to the transmission of the measurement configuration information) by the user equipment via a control channel. The measurement configuration information is transmitted using a control channel of the mobile communication network, i.e. from the perspective of the mobile communication network, the measurement configuration information is signalling information transmitted to the user equipment. In a second step subsequent to the first step, a local network information is detected by the user equipment by means of the second radio interface, the local network information comprising a network information of at least one WLAN network (or a network of another non-3GPP type) detectable by the user equipment at its current location (or position). The current location of the user equipment (at the time of the detection of the local network information (or of the network information of the at least one WLAN network)) is hereinafter also called the measurement user equipment location, and the time of the measurement (or the detection) of the at least one WLAN network is hereinafter also called the measurement point in time. In the third step of the inventive method (subsequent to the second step), the local network information is transmitted to the base station entity by using the first radio interface of the user equipment.

In the context of the present invention, the terms "radio access network node" and "base station entity" are used synonymously and refer to the evolved Node B (eNodeB or eNB) in LTE (Long Term Evolution), and the radio network controller (RNC) in UMTS (Universal Mobile Telecommunication System).

In the context of the present invention, i.e. according to all embodiments of the present invention, the measurement configuration information comprises data that enables the user equipment to determine which MDT measurements are to be performed when and/or where and/or according to which procedure and/or which parameters. Especially, the measurement configuration information also comprise a information or an indication to switch on or off the second radio interface, especially in case that the second radio interface is usually or temporarily only used to perform the MDT measurement or measurements.

The present invention is dedicated to improve planning and optimisation of mobile communication networks, especially radio mobile networks. For this purpose today expensive drive tests and analysis is needed to understand problems in a network. With the present invention, the location information of user equipment can be better estimated and related to radio specific events. By anonymous analysis of mass data including location information the planning and optimisation can be automated and simplified for the sake of better quality form customer point of view.

It is especially preferred that data that are processed by the mobile communication network or by a MDT related network entity of the mobile communication network is only processed in anonymized form.

According to a preferred embodiment of the present invention, the transmission of the measurement configuration information is part of a signalling procedure of the radio resource control (RRC) of the mobile communication network.

Thereby, it is advantageously possible according to the present invention to transmit the measurement configuration information as part of signalling data exchanged between the mobile communication network and the user equipment.

Furthermore, it is preferred according to the present invention that - during a fifth step subsequent to the second step and prior to the third step - the local network information is logged by the user equipment during a time interval between the measurement point in time of the local network information and the user equipment being in connected state.

Thereby, it is advantageously possible to store the local network information in a memory device of the user equipment during the time interval between the measurement point in time of the local network information and the user equipment having an uplink communication link with the base station entity, i.e. the user equipment has the possibility to transmit (signalling) data to the base station entity (or more generally to the mobile communication network).

According to the present invention, it is especially preferred that the network information and/or the further network information comprises one or a plurality out of the following:
-- an SSID information (service set identifier) of the detected WLAN network or of the detected further WLAN network or pieces of SSID information of the plurality of detected further WLAN networks,
-- a list of supported transmission modes of the detected WLAN network or of the detected further WLAN network or lists of supported transmission modes of the plurality of detected further WLAN networks,
-- an encryption mode information of the detected WLAN network or of the detected further WLAN network or pieces of encryption mode information of the plurality of detected further WLAN networks,
-- a signal strength of the detected WLAN network or of the detected further WLAN network or signal strengths of the plurality of detected further WLAN networks,
-- a signal quality of the detected WLAN network or of the detected further WLAN network or signal qualities of the plurality of detected further WLAN networks,
-- a measured channel of the detected WLAN network or of the detected further WLAN network or measured channels of the plurality of detected further WLAN networks,
-- a MAC address (media access control address) of the detected WLAN network or of the detected further WLAN network or MAC addresses of the plurality of detected further WLAN networks,
-- a Internet Protocol address (IP address) of the detected WLAN network or of the detected further WLAN network or Internet Protocol addresses of the plurality of detected further WLAN networks.

Thereby, it is advantageously possible according to the present invention that the network information or the further network information comprises useful and meaningful data such that - even in case that the network information does not specifically comprise (absolute) location information of the location or the position of the user equipment - a localization of the user equipment is possible with sufficient accuracy by the base station entity or another network node of the mobile communication network, especially by using additional reference information (that are independent of the network information or the further network information.

It is preferred according to the present invention that the local network information comprises - besides the network information of the at least one WLAN network - at least one out of the following:
-- an indication of the measurement point in time,
-- a measurement information related to neighbour cell measurements and/or-TA measurements (timing advance) of the user equipment, the neighbour cell and/or TA measurements being intra-frequency neighbour cell measurements and/or inter-frequency neighbour cell measurements and/or inter-RAT (radio access technology) neighbour cell measurements,
-- a handover history information related to previous serving cells of the mobile communication network used by the user equipment,
-- at least one further network information of a further WLAN network detectable at the measurement user equipment location and at a measurement point in time or a plurality of further network information of a plurality of further WLAN networks,
-- a location information based on the reception of a GNSS signal (Global Navigation Satellite System) by the user equipment, the location information comprising preferably an information related to a measurement altitude, the measurement altitude being the geographical altitude of the measurement user equipment location,
-- a movement and/or directional information based on data generated by one sensor or a plurality of sensors out of the following sensors, the movement and/or directional information being related to either the measurement point in time or to a point in time or a time interval prior to the measurement point in time:
   -- an acceleration sensor of the user equipment,
   -- a gyroscope of the user equipment,
   -- a magnetometer sensor and/or an electronic compass and/or a Hall effect sensor of the user equipment,
   -- an altitude sensor and/or a barometer of the user equipment.

Thereby, it is advantageously possible according to the present invention that the local network information includes additional information that especially enables the base station entity or a network node of the mobile communication network to determine the position of the user equipment with a higher accuracy than without the additional information. The additional information especially comprises information or data provided by a sensor or a plurality of sensors such as an acceleration sensor and/or a gyroscope and/or a magnetometer sensor and/or an electronic compass and/or a Hall effect sensor and/or an altitude sensor and/or a barometer.

Furthermore, according to the present invention, the measurement configuration information transmitted from the mobile communication network to the user equipment comprises a sensor activation/deactivation information, the sensor activation/deactivation information indicating to the user equipment to activate or to deactivate one sensor or a plurality of sensors of the user equipment, especially one sensor or a plurality of sensors out of the following sensors: an acceleration sensor of the user equipment, a gyroscope of the user equipment, a magnetometer sensor and/or an electronic compass and/or a Hall effect sensor of the user equipment, an altitude sensor and/or a barometer of the user equipment.

It is thereby advantageously possible to activate and deactivate specifically the different sensors and hence limit their activity (and hence their power consumption within the user equipment) to a minimum.

Furthermore, according to the present invention, the method comprises a step of the user equipment indicating to the mobile communication network or to the base station entity its capability of having one sensor or a plurality of sensors out of the following sensors:
-- an acceleration sensor,
-- a gyroscope,
-- a magnetometer sensor and/or an electronic compass and/or a Hall effect sensor,
-- an altitude sensor and/or a barometer.

Thereby, it is advantageously possible to adapt the measurement configuration information in dependency of the capabilities of the user equipment, i.e. the indication of the capabilities of the user equipment is sent to the mobile communication network or to the base station entity prior to the first step of the inventive method, i.e. prior to the user equipment receiving the measurement configuration information, and the measurement configuration information is adapted according to the capabilities of the user equipment. According to another variant of an indication of the user equipment capabilities towards the mobile communication network and/or to the base station entity, it is also possible that the user equipment capabilities are transmitted to the mobile communication network or to the base station entity after having received the measurement configuration information (i.e. subsequent to the first step of the inventive method), e.g. in order to indicate that a certain type of sensor is not available and that - consequently - the absence of a corresponding sensor value is not an error.

Furthermore, the present invention is defined by a user equipment for enhancing the transmission of environment-related information between the user equipment and a mobile communication network according to the subject-matter of claim 7.

Furthermore, it is preferred according to the present invention that the user equipment is configured to indicate to the mobile communication network or to the base station entity its capability of having the second radio interface.

All preferred embodiments as mentioned above with regard to the inventive method are also - mutatis mutandis - to be applied to the user equipment.

Typically, the user equipment comprises a subscriber identity module (SIM). At least parts of the steps according to the inventive method can also be performed by or using the subscriber identity module.

Additionally, the present invention is defined by programs comprising computer readable program code according to the subject-matter of claim 8 and according to the subject-matter of claim 9 respectively.

Still additionally, the present invention is defined by computer program products according to the subject-matter of claim 10 and according to the subject-matter of claim 11 respectively.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

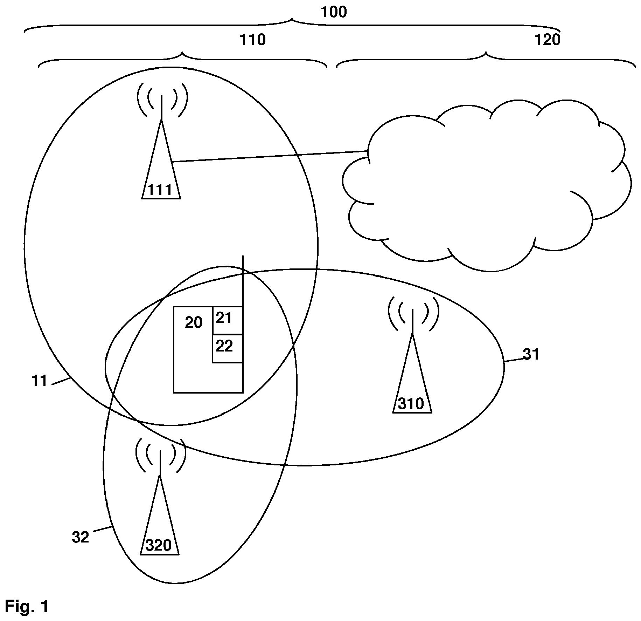

Figure 1 schematically illustrates a mobile communication network and a user equipment that is connected to the mobile communication network via a base station entity of the mobile communication network and via a first radio interface of the user equipment, and wherein the user equipment is able to detect the radio environment by means of a second radio interface.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a mobile communication network 100, especially a public land mobile network 100, is schematically shown, the mobile communication network 100 comprising an access network 110 and a core network 120. The mobile communication network 100 is preferably a cellular telecommunications network comprising typically a plurality of network cells or radio cells. A radio cell typically comprises at least one base station entity. One radio cell 11 is exemplarily represented in Figure 1, the radio cell 11 comprising one base station entity 111.

According to the present invention, a user equipment 20 camps on the radio cell 11 or on the mobile communication network 100 or on the base station entity 111. This is represented in Figure 1 by means of showing the user equipment 20 within the radio cell 11.

The user equipment 20 comprises a first radio interface 21 and a second radio interface 22. It is underlined that radio interface 21 is mobile communication standard, like 3GPP, and comprises a MDT framework and 22 is a non 3GPP interface. The first radio interface 21 of the user equipment 20 is used for the radio connection between the user equipment 20 and the base station entity 111. This radio connection is established in both directions (i.e. both in downlink direction as well as in uplink direction) in case that the user equipment 20 is in connected state. The radio connection between the user equipment 20 and the mobile communication network (or the base station entity 111) is not established (at least in one direction, typically in uplink direction) in case that the user equipment 20 is in idle mode (i.e. is (only) camping on the base station entity 111 or on the mobile communication network 100 but not in an active communication involving the exchange of payload data). This means that the radio connection between the user equipment 20 and the mobile communication network 100 (or the base station entity 111) is at least able to be established using the first radio interface 21 of the user equipment 20.

In such a situation, in order to use the user equipment 20 for MDT purposes, measurement data of measurements performed by the user equipment 20 can either be directly transmitted to the mobile communication network 100 (or at least to the base station entity 111) in case that the radio connection with the base station entity 111 is established (typically in both directions). Alternatively, in case that the radio connection is either not available (e.g. a coverage hole in downlink) and the user equipment 20 is searching for it, not established or not completely established (especially not established in uplink direction), the measured data of measurements performed by the user equipment 20 for MDT purposes need to be logged (or stored in a memory device of the user equipment 20) and can only be transmitted to the mobile communication network 100 (or to the base station entity 111) in a situation where the radio connection is again established between the user equipment 20 and the mobile communication network 100 (typically in both directions, but in any case in uplink direction, i.e. from the user equipment 20 towards the base station entity 111 / mobile communication network 100).

By means of the second radio interface 22, the user equipment 20 is able to detect other radio networks (besides the mobile communication network 100 and its network nodes or entities such as neighbour cell base station entities that are typically located in the vicinity of the base station entity 111 or of the radio cell 11). According to the present invention, typically WLAN-type radio networks are relevant for measurements for MDT purposes as such radio networks are relatively common and active in a comparably high numbers. However, it is important that the present invention is mainly directed to the situation where the second radio interface 22 is a different radio interface compared to the first radio interface, especially in the sense that the second radio interface is not a 3GPP-type radio interface (i.e. the second radio interface not being a radio interface as standardized by the 3GPP standardization documents, especially a GSM, UMTS, GERAN or LTE radio interface), but a different radio interface, e.g. of the Bluetooth-type or a CDMA-type. In the following, the term "WLAN" or "WLAN-type" is meant to comprise radio networks of a different type than 3GPP-type radio interfaces, especially WLAN radio networks. Two examples of such WLAN-type radio networks are exemplarily shown in Figure 1: A WLAN network 31 comprising a WLAN router 310 or another WLAN device capable of emitting and/or receiving radio signals according to the WLAN-standard is present (and activated) in the vicinity of the user equipment 20 such that the user equipment 20 is able to receive signals from the WLAN network 31 / WLAN device 310; and a further WLAN network 32 comprising a further WLAN router 320 or a further WLAN device capable of emitting and/or receiving radio signals according to the WLAN-standard is also present (and activated) in the vicinity of the user equipment 20 such that the user equipment 20 is able to receive also signals from the further WLAN network 32 / further WLAN device 320. The WLAN network 31 is hereinafter also called the first WLAN network 31 and the further WLAN network 32 is hereinafter also called the second WLAN network 32.

According to the present invention, the mobile communication network 100 (i.e. the base station entity 111) transmits - in a first step according to the inventive method of the present invention - a measurement configuration information to the user equipment 20 indicating to perform measurements for MDT purposes, especially detecting WLAN networks in the vicinity of the user equipment 20. The mobile communication network 100 takes into account eventually capability information received from the user equipment 20 to ensure that only this configuration is transmitted to the user equipment it can support the dedicated measurements or information.

In a second step (subsequent to the first step), the user equipment 20 detects the WLAN network 31 and/or the further WLAN network 32. In a third step (subsequent to the second step), the user equipment 20 transmits a local network information to the mobile communication network 100 (i.e. to the base station entity 111). In case that the user equipment 20 is in idle mode at the measurement point in time, the local network information is logged by the user equipment 20 for a subsequent transmission towards the mobile communication network 100.

The local network information especially comprises any information or data related to the WLAN networks 31, 32 (or more than two WLAN networks) in the vicinity of the user equipment 20. These data especially comprise the SSID information (service set identifier) of the detected WLAN network 31, 32, a list of supported transmission modes of the detected WLAN networks 31, 32, an encryption mode information of the detected WLAN networks 31, 32, a signal strength of the detected WLAN networks 31, 32, a signal quality of the detected WLAN networks 31, 32, a measured channel of the detected WLAN networks 31, 32, a MAC address (media access control address) of the detected WLAN networks 31, 32, an Internet Protocol address (IP address) of the detected WLAN networks 31, 32.

Additionally to providing information relating the detected WLAN networks 31, 32, it is possible and preferred that the local network information comprises further measurement information or measurement data. Such further measurement data are preferably obtained by either the first radio interface 21 and/or by one sensor or a plurality of sensors of the user equipment 20. Such sensors especially include one or a plurality of the following sensors or sensor types: an acceleration sensor and/or a gyroscope and/or a magnetometer sensor and/or an electronic compass and/or a Hall effect sensor and/or an altitude sensor and/or a barometer.

The additional data comprised in the local network information especially comprise one or a plurality out of the following:
-- an indication of the measurement point in time,
-- a measurement information related to neighbour cell measurements and/or TA measurements (timing advance) of the user equipment 20, the neighbour cell and/or TA measurements being intra-frequency neighbour cell measurements and/or inter-frequency neighbour cell measurements and/or inter-RAT (radio access technology) neighbour cell measurements,
-- a handover history information related to previous serving cells of the mobile communication network 100 used by the user equipment 20,
-- at least one further network information of the further WLAN network 32 detectable at the measurement user equipment location and at a measurement point in time or a plurality of further network information of a plurality of further WLAN networks,
-- a location information based on the reception of a GNSS signal (Global Navigation Satellite System) by the user equipment 20, the location information comprising preferably an information related to a measurement altitude, the measurement altitude being the geographical altitude of the measurement user equipment location,
-- a movement and/or directional information based on data generated by one sensor or a plurality of sensors out of the following sensors, the movement and/or directional information being related to either the measurement point in time or to a point in time or a time interval prior to the measurement point in time:
   -- an acceleration sensor of the user equipment 20,
   -- a gyroscope of the user equipment 20,
   -- a magnetometer sensor and/or an electronic compass and/or a Hall effect sensor of the user equipment 20,
   -- an altitude sensor and/or a barometer of the user equipment 20.

## Claims

1. Method for enhancing the transmission of environment-related information between a user equipment (20) that performs a minimization of drive tests, MDT, measurement and a mobile communication network (100),
wherein the mobile communication network (100) comprises a base station entity (111), and wherein the user equipment (20) comprises a first radio interface (21), wherein a radio connection between the user equipment (20) and the base station entity (111) is at least able to be established using the first radio interface (21) of the user equipment (20),
wherein the user equipment (20) comprises a second radio interface (22), the second radio interface (22) being a wireless local area network-type, WLAN-type, capable radio interface,
wherein the method comprises the following steps:
-- transmitting, in a first step, a measurement configuration information from the mobile communication network (100) to the user equipment (20), and receiving, in the first step, the measurement configuration information at the user equipment (20) from the mobile communication network (100), wherein a control channel of the mobile communication network (100) is used for the transmission of the measurement configuration information,
-- detecting, in a second step subsequent to the first step and while the user equipment (20) being located at a measurement user equipment location, a local network information by means of the second radio interface (22), the local network information comprising a network information of at least one WLAN network (31, 310) detectable at the measurement user equipment location and at a measurement point in time,
-- transmitting, in a third step subsequent to the second step, the local network information to the base station entity (111) by using the first radio interface (21) of the user equipment (20),
**characterized in that** the method comprises a fourth step of the user equipment (20) indicating to the mobile communication network (100) or to the base station entity (111) its capability of having one sensor or a plurality of sensors out of the following sensors:
-- an acceleration sensor,
-- a gyroscope,
-- a magnetometer sensor and/or an electronic compass and/or a Hall effect sensor,
-- an altitude sensor and/or a barometer;
said fourth step being performed prior to the first step; wherein the measurement configuration information transmitted from the mobile communication network (100) to the user equipment (20) comprises a sensor activation/deactivation information being based on the indicated capability, the sensor activation/deactivation information indicating to the user equipment (20) to activate or to deactivate one sensor or a plurality of sensors out of said sensors.

2. Method according to claim 1, wherein - during a fifth step subsequent to the second step and prior to the third step - the local network information is logged by the user equipment (20) during a time interval between the measurement point in time of the local network information and the user equipment (20) being in connected state.

3. Method according to one of the preceding claims, wherein the network information and/or the further network information of a further WLAN network (32, 320) comprises one or a plurality out of the following:
-- a service set identifier information, SSID information, of the detected WLAN network (31, 310) or of the detected further WLAN network (32, 320) or pieces of SSID information of the plurality of detected further WLAN networks,
-- a list of supported transmission modes of the detected WLAN network (31, 310) or of the detected further WLAN network (32, 320) or lists of supported transmission modes of the plurality of detected further WLAN networks,
-- an encryption mode information of the detected WLAN network (31, 310) or of the detected further WLAN network (32, 320) or pieces of encryption mode information of the plurality of detected further WLAN networks,
-- a signal strength of the detected WLAN network (31, 310) or of the detected further WLAN network (32, 320) or signal strengths of the plurality of detected further WLAN networks,
-- a signal quality of the detected WLAN network (31, 310) or of the detected further WLAN network (32, 320) or signal qualities of the plurality of detected further WLAN networks,
-- a measured channel of the detected WLAN network (31, 310) or of the detected further WLAN network (32, 320) or measured channels of the plurality of detected further WLAN networks,
-- a media access control address, MAC address, of the detected WLAN network (31, 310) or of the detected further WLAN network (32, 320) or MAC addresses of the plurality of detected further WLAN networks,
-- an Internet Protocol address, IP address, of the detected WLAN network (31, 310) or of the detected further WLAN network (32, 320) or Internet Protocol addresses of the plurality of detected further WLAN networks.

4. Method according to one of the preceding claims, wherein the local network information comprises - besides the network information of the at least one WLAN network (31, 310) - at least one out of the following:
-- an indication of the measurement point in time,
-- a measurement information related to neighbour cell measurements and/or timing advance measurements, TA measurements, of the user equipment (20), the neighbour cell and/or TA measurements being intra-frequency neighbour cell measurements and/or inter-frequency neighbour cell measurements and/or inter-radio access technology, inter-RAT, neighbour cell measurements,
-- a handover history information related to previous serving cells of the mobile communication network (100) used by the user equipment (20),
-- at least one further network information of a further WLAN network (32, 320) detectable at the measurement user equipment location and at a measurement point in time or a plurality of further network information of a plurality of further WLAN networks,
-- a location information based on the reception of a Global Navigation Satellite System signal, GNSS signal, by the user equipment (20), the location information comprising preferably an information related to a measurement altitude, the measurement altitude being the geographical altitude of the measurement user equipment location,
-- a movement and/or directional information based on data generated by one sensor or a plurality of sensors out of the following sensors, the movement and/or directional information being related to either the measurement point in time or to a point in time or a time interval prior to the measurement point in time:
-- an acceleration sensor of the user equipment (20),
-- a gyroscope of the user equipment (20),
-- a magnetometer sensor and/or an electronic compass and/or a Hall effect sensor of the user equipment (20),
-- an altitude sensor and/or a barometer of the user equipment (20).

5. Method according to one of the preceding claims, wherein the transmission of the measurement configuration information is part of a signalling procedure of the radio resource control (RRC) of the mobile communication network (100).

6. Method according to one of the preceding claims, wherein the method comprises a step of the user equipment (20) indicating to the mobile communication network (100) or to the base station entity (111) its capability of having the second radio interface.

7. User equipment (20) for enhancing the transmission of environment-related information between the user equipment (20) that is configured to perform a minimization of drive tests, MDT, measurement and a mobile communication network (100),
wherein the mobile communication network (100) comprises a base station entity (111), and wherein the user equipment (20) comprises a first radio interface (21),
wherein a radio connection between the user equipment (20) and the base station entity (111) is at least able to be established using the first radio interface (21) of the user equipment (20),
wherein the user equipment (20) comprises a second radio interface (22), the second radio interface (22) being a wireless local area network-type, WLAN-type, capable radio interface,
wherein the user equipment (20) is configured such that a measurement configuration information is received by the user equipment (20) from the mobile communication network (100), wherein a control channel of the mobile communication network (100) is used for the transmission of the measurement configuration information,
wherein the user equipment (20) is furthermore configured such that - while the user equipment (20) being located at a measurement user equipment location - a local network information is detected by means of the second radio interface (22), the local network information comprising a network information of at least one WLAN network (31, 310) detectable at the measurement user equipment location and at a measurement point in time,
wherein the user equipment (20) is furthermore configured such that the local network information is transmitted to the base station entity (111) by using the first radio interface (21) of the user equipment (20),
**characterized in that** the user equipment (20) is configured to indicate to the mobile communication network (100) or to the base station entity (111) its capability of having one sensor or a plurality of sensors out of the following sensors:
-- an acceleration sensor,
-- a gyroscope,
-- a magnetometer sensor and/or an electronic compass and/or a Hall effect sensor,
-- an altitude sensor and/or a barometer;
wherein the measurement configuration information transmitted from the mobile communication network (100) to the user equipment (20) comprises a sensor activation/deactivation information being based on the indicated capability, the sensor activation/deactivation information indicating to the user equipment (20) to activate or to deactivate one sensor or a plurality of sensors out of said sensors.

8. Program comprising a computer readable program code which, when executed on a network entity of a mobile communication network (100), causes the network entity of the mobile communication network (100) to perform the first step of a method according any one of claims 1 to 5.

9. Program comprising a computer readable program code which, when executed on a user equipment (20), causes the user equipment (20) to perform the first, second, third and fourth step of a method according to claim 1 or the first, second, third, fourth, and fifth step of a method according to one of claims 2 to 5.

10. Computer program product comprising a computer program stored on a storage medium, the computer program comprising program code which, when executed on a network entity of a mobile communication network (100), causes the network entity of the mobile communication network (100) to perform the first step of a method according any one of claims 1 to 5.

11. Computer program product comprising a computer program stored on a storage medium, the computer program comprising program code which, when executed on a user equipment (20), causes the user equipment (20) to perform the first, second, third and fourth step of a method according to claim 1 or the first, second, third, fourth, and fifth step of a method according to one of claims 2 to 5.

## Patentansprüche

1. Verfahren zum Verbessern der Übertragung von umgebungsbezogenen Informationen zwischen einer Nutzerausrüstung (20), die eine MDT(Minimization of Drive Tests)-Messung durchführt, und einem mobilen Kommunikationsnetzwerk (100),
wobei das mobile Kommunikationsnetzwerk (100) eine Basisstationseinheit (111) umfasst und wobei die Nutzerausrüstung (20) eine erste Funkschnittstelle (21) umfasst, wobei eine Funkverbindung zwischen der Nutzerausrüstung (20) und der Basisstationseinheit (111) mindestens imstande ist, unter Verwendung der ersten Funkschnittstelle (21) der Nutzerausrüstung (20) eingerichtet zu werden,
wobei die Nutzerausrüstung (20) eine zweite Funkschnittstelle (22) umfasst, wobei die zweite Funkschnittstelle (22) eine Drahtloses-lokales-Bereichsnetzwerk-Typ-, WLAN-Typ-fähige Funkschnittstelle ist,
wobei das Verfahren die folgenden Schritte umfasst:
- Übertragen, in einem ersten Schritt, einer Messungskonfigurationsinformation von dem mobilen Kommunikationsnetzwerk (100) an die Nutzerausrüstung (20) und Empfangen, in dem ersten Schritt, der Messungskonfigurationsinformation an der Nutzerausrüstung (20) von dem mobilen Kommunikationsnetzwerk (100), wobei ein Steuerkanal des mobilen Kommunikationsnetzwerks (100) für die Übertragung der Messungskonfigurationsinformation verwendet wird,
- Erfassen, in einem zweiten Schritt nach dem ersten Schritt und während sich die Nutzerausrüstung (20) an einem Messungsnutzerausrüstungsstandort befindet, einer lokalen Netzwerkinformation mittels der zweiten Funkschnittstelle (22), wobei die lokale Netzwerkinformation eine Netzwerkinformation von mindestens einem WLAN-Netzwerk (31, 310) umfasst, das an dem Messungsnutzerausrüstungsstandort und zu einem Messzeitpunkt erfassbar ist,
- Übertragen, in einem dritten Schritt nach dem zweiten Schritt, der lokalen Netzwerkinformation an die Basisstationseinheit (111) unter Verwendung der ersten Funkschnittstelle (21) der Nutzerausrüstung (20),
**dadurch gekennzeichnet, dass** das Verfahren einen vierten Schritt der Nutzerausrüstung (20) umfasst, der dem mobilen Kommunikationsnetzwerk (100) oder der Basisstationseinheit (111) eine Fähigkeit davon angibt, einen Sensor oder mehrere Sensoren aus den folgenden Sensoren aufzuweisen:
- einen Beschleunigungssensor,
- ein Gyroskop,
- einen Magnetometer-Sensor und/oder einen elektronischen Kompass und/oder einen Hall-Effekt-Sensor,
- einen Höhensensor und/oder ein Barometer;
wobei der vierte Schritt vor dem ersten Schritt durchgeführt wird;
wobei die Messungskonfigurationsinformation, die von dem mobilen Kommunikationsnetzwerk (100) an die Nutzerausrüstung (20) übertragen wird, eine Sensor-Aktivierung/Deaktivierung-Information umfasst, die auf der angegebenen Fähigkeit beruht, wobei die Sensor-Aktivierung/Deaktivierung-Information der Nutzerausrüstung (20) angibt, einen Sensor oder mehrere Sensoren aus den Sensoren zu aktivieren oder zu deaktivieren.

2. Verfahren nach Anspruch 1, wobei - während eines fünften Schritts nach dem zweiten Schritt und vor dem dritten Schritt - die lokale Netzwerkinformation von der Nutzerausrüstung (20) während eines Zeitintervalls zwischen dem Messzeitpunkt der lokalen Netzwerkinformation und der Nutzerausrüstung (20) im verbundenen Zustand protokolliert wird.

3. Verfahren nach einem der vorhergehenden Ansprüche, wobei die Netzwerkinformation und/oder die weitere Netzwerkinformation eines weiteren WLAN-Netzwerks (32, 320) eines oder mehrere aus Folgendem umfasst:
- eine SSID(Service Set Identifier)-Information, des erfassten WLAN-Netzwerks (31, 310) oder des erfassten weiteren WLAN-Netzwerks (32, 320) oder Stücke von SSID-Informationen der mehreren erfassten weiteren WLAN-Netzwerke,
- eine Liste von unterstützten Übertragungsmodi des erfassten WLAN-Netzwerks (31, 310) oder des erfassten weiteren WLAN-Netzwerks (32, 320) oder Listen von unterstützten Übertragungsmodi der mehreren erfassten weiteren WLAN-Netzwerke,
- eine Verschlüsselungsmodusinformation des erfassten WLAN-Netzwerks (31, 310) oder des erfassten weiteren WLAN-Netzwerks (32, 320) oder Stücke von Verschlüsselungsmodusinformationen der mehreren erfassten weiteren WLAN-Netzwerke,
- eine Signalstärke des erfassten WLAN-Netzwerks (31, 310) oder des erfassten weiteren WLAN-Netzwerks (32, 320) oder Signalstärken der mehreren erfassten weiteren WLAN-Netzwerke,
- eine Signalqualität des erfassten WLAN-Netzwerks (31, 310) oder des erfassten weiteren WLAN-Netzwerks (32, 320) oder Signalqualitäten der mehreren erfassten weiteren WLAN-Netzwerke,
- einen gemessenen Kanal des erfassten WLAN-Netzwerks (31, 310) oder des erfassten weiteren WLAN-Netzwerks (32, 320) oder gemessene Kanäle der mehreren erfassten weiteren WLAN-Netzwerke,
- eine Medienzugriffssteuerung-Adresse, MAC-Adresse, des erfassten WLAN-Netzwerks (31, 310) oder des erfassten weiteren WLAN-Netzwerks (32, 320) oder MAC-Adressen der mehreren erfassten weiteren WLAN-Netzwerke,
- eine Internetprotokoll-Adresse, IP-Adresse, des erfassten WLAN-Netzwerks (31, 310) oder des erfassten weiteren WLAN-Netzwerks (32, 320) oder Internetprotokoll-Adressen der mehreren erfassten weiteren WLAN-Netzwerke.

4. Verfahren nach einem der vorhergehenden Ansprüche, wobei die lokale Netzwerkinformation - neben der Netzwerkinformation des mindestens einen WLAN-Netzwerks (31, 310) - mindestens eines aus Folgendem umfasst:
- eine Angabe des Messzeitpunkts,
- eine Messinformation, die sich auf Nachbarzellmessungen und/oder zeitlich vorgezogene Messungen, TA-Messungen, der Nutzerausrüstung (20) bezieht, wobei die Nachbarzell- und/oder TA-Messungen Intrafrequenz-Nachbarzellmessungen und/oder Interfrequenz-Nachbarzellmessungen und/oder Interfunk-Zugriffstechnologie-, Inter-RAT-Nachbarzellmessungen sind,
- eine Übergabeverlaufsinformation, die sich auf vorherige bedienende Zellen des mobilen Kommunikationsnetzwerks (100) bezieht, die von der Nutzerausrüstung (20) verwendet wurden,
- mindestens eine weitere Netzwerkinformation eines weiteren WLAN-Netzwerks (32, 320), das an dem Messungsnutzerausrüstungsstandort und zu einem Messzeitpunkt erfassbar ist, oder mehrere weitere Netzwerkinformationen von mehreren weiteren WLAN-Netzwerken,
- eine Standortinformation basierend auf dem Empfang eines globalen Navigationssatellitensystem-Signals, GNSS-Signals, durch die Nutzerausrüstung (20), wobei die Standortinformation vorzugsweise eine Information umfasst, die sich auf eine Messhöhe bezieht, wobei die Messhöhe die geografische Höhe des Messungsnutzerausrüstungsstandorts ist,
- eine Bewegungs- und/oder Richtungsinformation basierend auf Daten, die durch einen Sensor oder mehrere Sensoren aus den folgenden Sensoren erzeugt werden, wobei sich die Bewegungs- und/oder Richtungsinformation auf entweder den Messzeitpunkt oder einen Zeitpunkt oder ein Zeitintervall vor dem Messzeitpunkt bezieht:
- einen Beschleunigungssensor der Nutzerausrüstung (20),
- ein Gyroskop der Nutzerausrüstung (20),
- einen Magnetometer-Sensor und/oder einen elektronischen Kompass und/oder einen Hall-Effekt-Sensor der Nutzerausrüstung (20),
- einen Höhensensor und/oder ein Barometer der Nutzerausrüstung (20).

5. Verfahren nach einem der vorhergehenden Ansprüche, wobei die Übertragung der Messungskonfigurationsinformation Teil eines Signalisierungsverfahrens der Funkressourcensteuerung (RRC) des mobilen Kommunikationsnetzwerks (100) ist.

6. Verfahren nach einem der vorhergehenden Ansprüche, wobei das Verfahren einen Schritt der Nutzerausrüstung (20) umfasst, der dem mobilen Kommunikationsnetzwerk (100) oder der Basisstationseinheit (111) eine Fähigkeit davon angibt, die zweite Funkschnittstelle aufzuweisen.

7. Nutzerausrüstung (20) zum Verbessern der Übertragung von umgebungsbezogenen Informationen zwischen einer Nutzerausrüstung (20), die eingerichtet ist, um eine MDT(Minimization of Drive Tests)-Messung durchzuführen, und einem mobilen Kommunikationsnetzwerk (100),
wobei das mobile Kommunikationsnetzwerk (100) eine Basisstationseinheit (111) umfasst und wobei die Nutzerausrüstung (20) eine erste Funkschnittstelle (21) umfasst, wobei eine Funkverbindung zwischen der Nutzerausrüstung (20) und der Basisstationseinheit (111) mindestens imstande ist, unter Verwendung der ersten Funkschnittstelle (21) der Nutzerausrüstung (20) eingerichtet zu werden,
wobei die Nutzerausrüstung (20) eine zweite Funkschnittstelle (22) umfasst, wobei die zweite Funkschnittstelle (22) eine Drahtloses-lokales-Bereichsnetzwerk-Typ-, WLAN-Typ-fähige Funkschnittstelle ist,
wobei die Nutzerausrüstung (20) derart eingerichtet ist, dass eine Messungskonfigurationsinformation durch die Nutzerausrüstung (20) von dem mobilen Kommunikationsnetzwerk (100) empfangen wird, wobei ein Steuerkanal des mobilen Kommunikationsnetzwerks (100) für die Übertragung der Messungskonfigurationsinformation verwendet wird,
wobei die Nutzerausrüstung (20) des Weiteren derart eingerichtet ist, dass - während sich die Nutzerausrüstung (20) an einem Messungsnutzerausrüstungsstandort befindet - eine lokale Netzwerkinformation mittels der zweiten Funkschnittstelle (22) erfasst wird, wobei die lokale Netzwerkinformation eine Netzwerkinformation von mindestens einem WLAN-Netzwerk (31, 310) umfasst, das an dem Messungsnutzerausrüstungsstandort und zu einem Messzeitpunkt erfassbar ist,
wobei die Nutzerausrüstung (20) des Weiteren derart eingerichtet ist, dass die lokale Netzwerkinformation an die Basisstationseinheit (111) unter Verwendung der ersten Funkschnittstelle (21) der Nutzerausrüstung (20) übertragen wird,
**dadurch gekennzeichnet, dass** die Nutzerausrüstung (20) eingerichtet ist, um dem mobilen Kommunikationsnetzwerk (100) oder der Basisstationseinheit (111) eine Fähigkeit davon anzugeben, einen Sensor oder mehrere Sensoren aus den folgenden Sensoren aufzuweisen:
- einen Beschleunigungssensor,
- ein Gyroskop,
- einen Magnetometer-Sensor und/oder einen elektronischen Kompass und/oder einen Hall-Effekt-Sensor,
- einen Höhensensor und/oder ein Barometer;
wobei die Messungskonfigurationsinformation, die von dem mobilen Kommunikationsnetzwerk (100) an die Nutzerausrüstung (20) übertragen wird, eine Sensor-Aktivierung/Deaktivierung-Information umfasst, die auf der angegebenen Fähigkeit beruht, wobei die Sensor-Aktivierung/Deaktivierung-Information der Nutzerausrüstung (20) angibt, einen Sensor oder mehrere Sensoren aus den Sensoren zu aktivieren oder zu deaktivieren.

8. Programm, umfassend einen computerlesbaren Programmcode, der, wenn er auf einer Netzwerkeinheit eines mobilen Kommunikationsnetzwerks (100) ausgeführt wird, die Netzwerkeinheit des mobilen Kommunikationsnetzwerks (100) dazu veranlasst, den ersten Schritt eines Verfahrens nach einem der Ansprüche 1 bis 5 durchzuführen.

9. Programm, umfassend einen computerlesbaren Programmcode, der, wenn er auf einer Nutzerausrüstung (20) ausgeführt wird, die Nutzerausrüstung (20) dazu veranlasst, den ersten, zweiten, dritten und vierten Schritt eines Verfahrens nach Anspruch 1 oder den ersten, zweiten, dritten, vierten und fünften Schritt eines Verfahrens nach einem der Ansprüche 2 bis 5 durchzuführen.

10. Computerprogrammprodukt, umfassend ein Computerprogramm, das auf einem Speichermedium gespeichert ist, wobei das Computerprogramm einen Programmcode umfasst, der, wenn er auf einer Netzwerkeinheit eines mobilen Kommunikationsnetzwerks (100) ausgeführt wird, die Netzwerkeinheit des mobilen Kommunikationsnetzwerks (100) dazu veranlasst, den ersten Schritt eines Verfahrens nach einem der Ansprüche 1 bis 5 durchzuführen.

11. Computerprogrammprodukt, umfassend ein Computerprogramm, das auf einem Speichermedium gespeichert ist, wobei das Computerprogramm einen Programmcode umfasst, der, wenn er auf einer Nutzerausrüstung (20) ausgeführt wird, die Nutzerausrüstung (20) dazu veranlasst, den ersten, zweiten, dritten und vierten Schritt eines Verfahrens nach Anspruch 1 oder den ersten, zweiten, dritten, vierten und fünften Schritt eines Verfahrens nach einem der Ansprüche 2 bis 5 durchzuführen.

## Revendications

1. Procédé d'amélioration de la transmission d'information liée à l'environnement entre un équipement utilisateur (20) qui réalise une mesure de minimisation d'essais de pilotage, MDT, et un réseau de communication mobile (100),
dans lequel le réseau de communication mobile (100) comprend une entité de station de base (111), et dans lequel l'équipement utilisateur (20) comprend une première interface radio (21), dans lequel une connexion radio entre l'équipement utilisateur (20) et l'entité de station de base (111) est au moins capable d'être établie à l'aide de la première interface radio (21) de l'équipement utilisateur (20),
dans lequel l'équipement utilisateur (20) comprend une seconde interface radio (22), la seconde interface radio (22) étant une interface radio à capacité de type réseau local sans fil, type WLAN,
dans lequel le procédé comprend les étapes suivantes :
- la transmission, dans une première étape, d'une information de configuration de mesure du réseau de communication mobile (100) à l'équipement utilisateur (20), et la réception, dans la première étape, de l'information de configuration de mesure au niveau de l'équipement utilisateur (20) en provenance du réseau de communication mobile (100), dans lequel un canal de commande du réseau de communication mobile (100) est utilisé pour la transmission de l'information de configuration de mesure,
- la détection, dans une deuxième étape ultérieure à la première étape et tandis que l'équipement utilisateur (20) est situé à un emplacement d'équipement utilisateur de mesure, d'une information de réseau local au moyen de la seconde interface radio (22), l'information de réseau local comprenant une information de réseau d'au moins un réseau WLAN (31, 310) détectable à l'emplacement d'équipement utilisateur de mesure et à un moment de mesure,
- la transmission, dans une troisième étape ultérieure à la deuxième, de l'information de réseau local à l'entité de station de base (111) en utilisant la première interface radio (21) de l'équipement utilisateur (20),
**caractérisé en ce que** le procédé comprend une quatrième étape d'indication par l'équipement utilisateur (20) au réseau de communication mobile (100) ou à l'entité de station de base (111) de sa capacité d'avoir un capteur ou une pluralité de capteurs parmi les capteurs suivants :
- un capteur d'accélération,
- un gyroscope,
- un capteur de magnétomètre et/ou un compas électronique et/ou un capteur à effet de Hall,
- un capteur d'altitude et/ou un baromètre ;
ladite quatrième étape étant réalisée avant la première étape ;
dans lequel l'information de configuration de mesure transmise du réseau de communication mobile (100) à l'équipement utilisateur (20) comprend une information d'activation/désactivation de capteur qui est basée sur la capacité indiquée, l'information d'activation/désactivation de capteur indiquant à l'équipement utilisateur (20) d'activer ou de désactiver un capteur ou une pluralité de capteurs parmi lesdits capteurs.

2. Procédé selon la revendication 1, dans lequel, pendant une cinquième étape ultérieure à la deuxième étape et antérieure à la troisième étape, l'information de réseau local est journalisée par l'équipement utilisateur (20) pendant un intervalle de temps entre le moment de mesure de l'information de réseau local et le fait que l'équipement utilisateur (20) est dans un état connecté.

3. Procédé selon l'une des revendications précédentes, dans lequel l'information de réseau et/ou l'information de réseau supplémentaire d'un réseau WLAN supplémentaire (32, 320) comprennent un ou une pluralité parmi les suivants :
- une information d'identifiant d'ensemble de service, information SSID, du réseau WLAN (31, 310) détecté ou du réseau WLAN supplémentaire (32, 320) détecté ou des informations SSID de la pluralité de réseaux WLAN supplémentaires détectés,
- une liste de modes de transmission pris en charge du réseau WLAN (31, 310) détecté ou du réseau WLAN supplémentaire (32, 320) détecté ou des listes de modes de transmission pris en charge de la pluralité de réseaux WLAN supplémentaires détectés,
- une information de mode de chiffrement du réseau WLAN (31, 310) détecté ou du réseau WLAN supplémentaire (32, 320) détecté ou des informations de mode de chiffrement de la pluralité de réseaux WLAN supplémentaires détectés,
- une intensité de signal du réseau WLAN (31, 310) détecté ou du réseau WLAN supplémentaire (32, 320) détecté ou des intensités de signal de la pluralité de réseaux WLAN supplémentaires détectés,
- une qualité de signal du réseau WLAN (31, 310) détecté ou du réseau WLAN supplémentaire (32, 320) détecté ou des qualités de signal de la pluralité de réseaux WLAN supplémentaires détectés,
- un canal mesuré du réseau WLAN (31, 310) détecté ou du réseau WLAN supplémentaire (32, 320) détecté ou des canaux mesurés de la pluralité de réseaux WLAN supplémentaires détectés,
- une adresse de contrôle d'accès au support, adresse MAC, du réseau WLAN (31, 310) détecté ou du réseau WLAN supplémentaire (32, 320) détecté ou des adresses MAC de la pluralité de réseaux WLAN supplémentaires détectés,
- une adresse de protocole Internet, adresse IP, du réseau WLAN (31, 310) détecté ou du réseau WLAN supplémentaire (32, 320) détecté ou des adresses de protocole Internet de la pluralité réseaux WLAN supplémentaires détectés.

4. Procédé selon l'une des revendications précédentes, dans lequel l'information de réseau local comprend, en plus de l'information de réseau de l'au moins un réseau WLAN (31, 310), au moins l'une des suivantes :
- une indication du moment de mesure,
- une information de mesure liée à des mesures de cellule voisine et/ou des mesures d'avance de temps, mesures TA, de l'équipement utilisateur (20), les mesures de cellule voisine et/ou TA étant des mesures de cellule voisine intra-fréquence et/ou des mesures de cellule voisine inter-fréquence et/ou des mesures de cellule voisine de technologie d'accès inter-radio, inter-RAT,
- une information d'historique de transfert intercellulaire liée à des cellules de service précédentes du réseau de communication mobile (100) utilisées par l'équipement utilisateur (20),
- au moins une information de réseau supplémentaire d'un réseau WLAN supplémentaire (32, 320) détectable à l'emplacement d'équipement utilisateur de mesure et à un moment de mesure ou une pluralité d'informations de réseau supplémentaires d'une pluralité de réseaux WLAN supplémentaires,
- une information d'emplacement d'après la réception d'un signal de géolocalisation et navigation par un système de satellites, signal GNSS, par l'équipement utilisateur (20), l'information d'emplacement comprenant de préférence une information liée à une altitude de mesure, l'altitude de mesure étant l'altitude géographique de l'emplacement d'équipement utilisateur de mesure,
- une information de déplacement et/ou directionnelle d'après des données générées par un capteur ou une pluralité de capteurs parmi les capteurs suivants, l'information de déplacement et/ou directionnelle étant liée soit au moment de mesure, soit à un moment ou un intervalle de temps antérieur au moment de mesure :
- un capteur d'accélération de l'équipement utilisateur (20),
- un gyroscope de l'équipement utilisateur (20),
- un capteur de magnétomètre et/ou un compas électronique et/ou un capteur à effet de Hall de l'équipement utilisateur (20),
- un capteur d'altitude et/ou un baromètre de l'équipement utilisateur (20).

5. Procédé selon l'une des revendications précédentes, dans lequel la transmission de l'information de configuration de mesure fait partie d'une procédure de signalisation de la commande de ressource radio (RRC) du réseau de communication mobile (100).

6. Procédé selon l'une des revendications précédentes, dans lequel le procédé comprend une étape d'indication par l'équipement utilisateur (20) au réseau de communication mobile (100) ou à l'entité de station de base (111) de sa capacité d'avoir la seconde interface radio.

7. Equipement utilisateur (20) pour améliorer la transmission d'information liée à l'environnement entre l'équipement utilisateur (20) qui est configuré pour réaliser une mesure de minimisation d'essais de pilotage, MDT, et un réseau de communication mobile (100),
dans lequel le réseau de communication mobile (100) comprend une entité de station de base (111), et dans lequel l'équipement utilisateur (20) comprend une première interface radio (21), dans lequel une connexion radio entre l'équipement utilisateur (20) et l'entité de station de base (111) est au moins capable d'être établie à l'aide de la première interface radio (21) de l'équipement utilisateur (20),
dans lequel l'équipement utilisateur (20) comprend une seconde interface radio (22), la seconde interface radio (22) étant une interface radio à capacité de type réseau local sans fil, type WLAN,
dans lequel l'équipement utilisateur (20) est configuré de sorte qu'une information de configuration de mesure soit reçue par l'équipement utilisateur (20) en provenance du réseau de communication mobile (100), dans lequel un canal de commande du réseau de communication mobile (100) est utilisé pour la transmission de l'information de configuration de mesure,
dans lequel l'équipement utilisateur (20) est en outre configuré de sorte que, tandis que l'équipement utilisateur (20) est situé à un emplacement d'équipement utilisateur de mesure, une information de réseau local soit détecté au moyen de la seconde interface radio (22), l'information de réseau local comprenant une information de réseau d'au moins un réseau WLAN (31, 310) détectable à l'emplacement d'équipement utilisateur de mesure et à un moment de mesure,
dans lequel l'équipement utilisateur (20) est en outre configuré de sorte que l'information de réseau local soit transmise à l'entité de station de base (111) en utilisant la première interface radio (21) de l'équipement utilisateur (20),
**caractérisé en ce que** l'équipement utilisateur (20) est configuré pour indiquer au réseau de communication mobile (100) ou à l'entité de station de base (111) sa capacité d'avoir un capteur ou une pluralité de capteurs parmi les capteurs suivants :
- un capteur d'accélération,
- un gyroscope,
- un capteur de magnétomètre et/ou un compas électronique et/ou un capteur à effet de Hall,
- un capteur d'altitude et/ou un baromètre ;
dans lequel l'information de configuration de mesure transmise depuis le réseau de communication mobile (100) à l'équipement utilisateur (20) comprend une information d'activation/désactivation de capteur qui est basée sur la capacité indiquée, l'information d'activation/désactivation de capteur indiquant à l'équipement utilisateur (20) d'activer ou de désactiver un capteur ou une pluralité de capteurs parmi lesdits capteurs.

8. Programme comprenant un code de programme lisible par ordinateur qui, lorsqu'il est exécuté sur une entité de réseau d'un réseau de communication mobile (100), amène l'entité de réseau du réseau de communication mobile (100) à réaliser la première étape d'un procédé selon l'une quelconque des revendications 1 à 5.

9. Programme comprenant un code de programme lisible par ordinateur qui, lorsqu'il est exécuté sur un équipement utilisateur (20), amène l'équipement utilisateur (20) à réaliser les première, deuxième, troisième et quatrième étapes d'un procédé selon la revendication 1 ou les première, deuxième, troisième, quatrième, et cinquième étapes d'un procédé selon l'une des revendications 2 à 5.

10. Produit programme d'ordinateur comprenant un programme d'ordinateur stocké sur un support de stockage, le programme d'ordinateur comprenant un code de programme qui, lorsqu'il est exécuté sur une entité de réseau d'un réseau de communication mobile (100), amène l'entité de réseau du réseau de communication mobile (100) à réaliser la première étape d'un procédé selon l'une quelconque des revendications 1 à 5.

11. Produit programme d'ordinateur comprenant un programme d'ordinateur stocké sur un support de stockage, le programme d'ordinateur comprenant un code de programme qui, lorsqu'il est exécuté sur un équipement utilisateur (20), amène l'équipement utilisateur (20) à réaliser les première, deuxième, troisième et quatrième étapes d'un procédé selon la revendication 1 ou les première, deuxième, troisième, quatrième, et cinquième étapes d'un procédé selon l'une des revendications 2 à 5.
